# EUROPEAN PATENT SPECIFICATION

(11) **EP 2 749 796 B1**
(45) Date of publication and mention of the grant of the patent: **25.11.2015**
(21) Application number: 13005647.6
(22) Date of filing: 04.12.2013
(51) Int. Cl.: F16J 15/32

(54) **Sealing device**
Dichtungsvorrichtung
Dispositif d'obturation

(30) Priority: 28.12.2012 JP 2012267201
(43) Date of publication of application: 02.07.2014
(73) Proprietor: Carl Freudenberg KG, 69469 Weinheim (DE)
(72) Inventor: Kobayashi, Naoto, Fukushima-shi, Fukushima (JP); Nagahamaya, Hideaki, Fukushima-shi, Fukushima (JP)

(56) References cited:
- EP-A2- 0 866 249
- DE-A1- 10 334 896

## Description

### Technical field

The present invention relates to a sealing device associated with a sealing technique. The sealing device of the present invention is used for example in fields related to automobiles, and fields related to general-purpose machines and the like.

### Background art

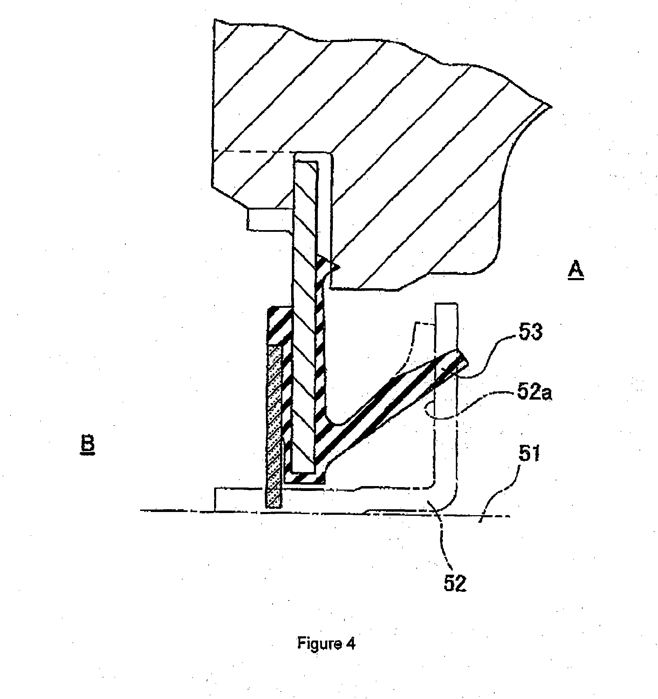

As illustrated in Figure 4, a conventionally known sealing device has a construction in which there is provided a slinger 52 which is secured to the outer circumference of a rotating shaft 51 and which rotates concomitantly with the rotating shaft 51, an end-surface lip 53 being in slidable intimate contact with an axial-direction end surface 52a of the slinger 52, thereby suppressing leakage to a machine exterior B of a sealed fluid (oil) which is present in a machine interior A.

Further, a screw seal is conventionally known as a type of sealing construction, sealed fluid being sealed by means of a pumping action exhibited by the screw seal when a screw portion provided on a rotating body rotates.

Supposing that the abovementioned screw seal is combined with the abovementioned sealing device, the configuration would for example be as described below.

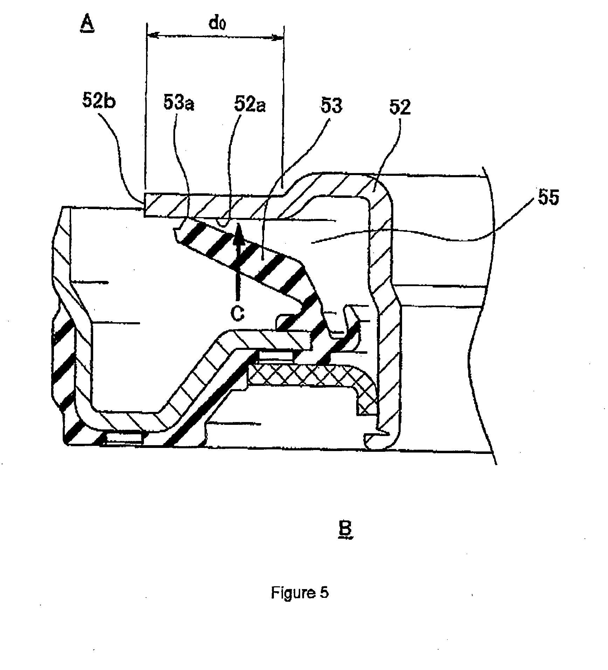

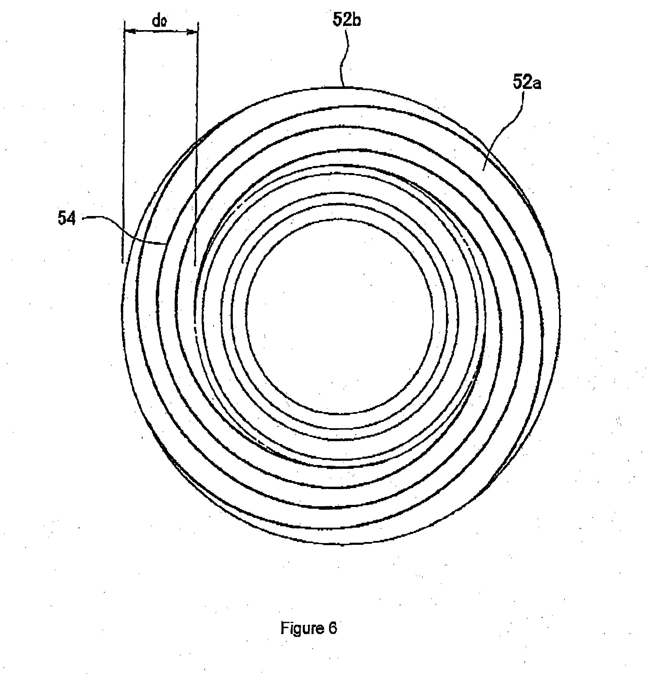

That is to say, as illustrated in Figure 5 and Figure 6, serving as an example for comparison with the present invention, there is provided a slinger 52 which is secured to the outer circumference of a rotating shaft (which is not shown in the drawings) and which rotates concomitantly with the rotating shaft, an end-surface lip 53 being in slidable intimate contact with an axial-direction end surface 52a of the slinger 52, thereby sealing a sealed fluid. Further, a screw portion 54 (Figure 6) is provided on the axial-direction end surface 52a of the slinger 52, sealed fluid being sealed by means of a pumping action exhibited when the screw portion 54 rotates.

However, the following problems have been identified when this combined technique is employed.

That is to say, in the abovementioned combined technique in Figure 5 and Figure 6, the screw portion 54 is provided in an annular region (a region formed with a screw portion) of the axial-direction end surface 52a of the slinger 52, extending from a radially central portion to an outer circumferential end portion 52b, and having a prescribed radial width d0. Further, the screw portion 54 is more specifically provided in the form of a spiral groove.

Therefore in terms of the positional relationship of such a screw portion 54 relative to a lip end 53a of the end-surface lip 53, the spiral groove is disposed in such a way that it passes the lip end 53a from a radially outer side to a radially inner side thereof, and therefore at the position in which the spiral groove and the lip end 53a intersect, a gap corresponding to the cross section of the groove is formed between the end-surface lip 53 and the slinger 51. Therefore when the rotating shaft 51 has stopped rotating and a centrifugal force is lost, sealed fluid passes the lip end 53a along the gap (the spiral groove), penetrating into an interior space 55 of the sealing device (occurrence of static leakage), and as a result there is a danger that the sealing performance of the sealing device will be compromised.

### Prior art literature

### Patent literature

DE-A-10334896
Patent literature article 1 Japanese Patent Kokai 1998-115375
Patent literature article 2 Japanese Patent Kokai 1995-208610

### Summary of the invention

### Problems to be resolved by the invention

The present invention takes account of the abovementioned points, and its object is to provide a sealing device in which static leakage does not occur even if a screw portion is provided in an axial-direction end surface of a slinger with which an end-surface lip is in slidable intimate contact, and which can therefore exhibit excellent sealing performance.

### Means of overcoming the problem

In order to achieve the abovementioned object, the sealing device according to Claim 1 of the present invention is a sealing device in which a sealed fluid is sealed by an end-surface lip coming into slidable intimate contact with an axial-direction end surface of a slinger which is secured to the outer circumference of a rotating shaft and rotates concomitantly with the abovementioned rotating shaft, and in which the abovementioned sealed fluid is sealed by means of a pumping action exhibited when a screw portion provided on the axial-direction end surface of the abovementioned slinger rotates, characterized in that the abovementioned slinger is provided with a region with no screw portion, in which no screw portion is provided, on the outer circumferential side of a region formed with a screw portion, in which the abovementioned screw portion is provided, and in that a lip end of the abovementioned end-surface lip is in slidable intimate contact with the abovementioned region formed with a screw portion, and a lip end of an auxiliary lip moulded integrally at a distal end portion of said end-surface lip is in slidable intimate contact with the abovementioned region with no screw portion.

Further, the sealing device according to Claim 2 of the present invention is the sealing device recited in the abovementioned Claim 1, characterized in that the abovementioned auxiliary lip is made to be thinner than the abovementioned end-surface lip by providing an annular indentation between the lip end of the abovementioned end-surface lip and the lip end of the abovementioned auxiliary lip.

In the sealing device of the present invention having the abovementioned configuration, the configuration is such that a region with no screw portion, in which no screw portion is provided, is provided on the outer circumferential side of a region formed with a screw portion, in which a screw portion is provided, on an axial-direction end surface of a slinger, an auxiliary lip is moulded integrally at a distal end portion of an end-surface lip, and a lip end of the auxiliary lip is in slidable intimate contact with the region with no screw portion, and thus by the lip end of the auxiliary lip being in intimate contact with the flat region with no screw portion, a leakage pathway for static leakage is blocked and the sealed fluid is sealed. In other words, when the rotating shaft has stopped, the sealed fluid is sealed by the auxiliary lip and does not reach the screw portion, and it is therefore possible to suppress the occurrence of static leakage along the screw portion.

In the end-surface lip, which is provided with a lip end and at the distal end portion of which an auxiliary lip is integrally moulded, the auxiliary lip is also provided with a lip end, thereby forming a multi-stage lip end construction in which one lip is provided with two lip ends, an annular indentation being provided between the lip end of the end-surface lip and the lip end of the auxiliary lip. Therefore, by providing this indentation, the auxiliary lip is made to be correspondingly thinner than the end-surface lip, and thus the auxiliary lip is relatively flexible and readily undergoes elastic deformation. Therefore the auxiliary lip can be easily separated from the axial-direction end surface of the slinger by means of a centrifugal force acting during rotation, and/or by the pressure of a pumping action that is exhibited by the screw portion and is oriented radially outward, and therefore the auxiliary lip does not inhibit the pumping action (sealing action) of the screw portion.

### Advantages of the invention

The present invention exhibits the following advantages.

That is to say, in the present invention as described hereinabove, the configuration is such that a region with no screw portion, in which no screw portion is provided, is provided on the outer circumferential side of a region formed with a screw portion, in which a screw portion is provided, on an axial-direction end surface of a slinger, an auxiliary lip is moulded integrally at a distal end portion of an end-surface lip, and a lip end of the auxiliary lip is in slidable intimate contact with the region with no screw portion, and thus by the lip end of the auxiliary lip being in intimate contact with the flat region with no screw portion, a leakage pathway for static leakage is blocked and the sealed fluid is sealed. Therefore, in line with the intended object of the present invention, it is possible to provide a sealing device in which static leakage does not occur even if a screw portion is provided in an axial-direction end surface of a slinger with which an end-surface lip is in slidable intimate contact, and which therefore exhibits excellent sealing performance. Further, the auxiliary lip is easily separated from the axial-direction end surface of the slinger, and therefore the auxiliary lip does not inhibit the pumping action (sealing action) of the screw portion.

### Brief explanation of the figures

- Figure 1: Cross-sectional view of the main parts of a sealing device according to an embodiment of the present invention
- Figure 2: Drawing as viewed in the direction of the arrow E in Figure 1, being an explanatory view of a screw portion in the same sealing device
- Figure 3: Cross-sectional view of the main parts of the same sealing device, illustrating a state before the lip seal member is combined with the slinger.
- Figure 4: Cross-sectional view of the main parts of a sealing device according to the prior art
- Figure 5: Cross-sectional view of the main parts of a sealing device according to the prior art
- Figure 6: Drawing as viewed in the direction of the arrow C in Figure 5, being an explanatory view of a screw portion in the same sealing device

### Mode of embodying the invention

The following mode of embodiment is included in the present invention.
(1) Problem
   (1-1) A conventional sealing device (end-surface lip type oil seal) is used as a set with a slinger, sealing oil by means of an oil spinning-off effect which occurs by virtue of the fact that the slinger rotates together with a shaft, and an oil pumping action due to a screw groove established on the inner surface of the slinger.
   (1-2) In the prior art there is a problem in that oil penetrates into the interior of the seal through the screw groove on the inner surface of the slinger when it is static.
(2) Configuration
   (2-1) In order to prevent oil leakage when static, an auxiliary lip is established and a flat portion in which no screw groove is provided is established on part of the inner surface of the slinger.
   (2-2) Static leakage is prevented by bringing the auxiliary lip into contact with the flat portion.
(3) Advantages
   (3-1) According to the present invention it is possible to prevent oil leakage when static, while maintaining the oil pumping action due to the screw groove. Further, according to the present invention it is possible to prevent oil leakage in the portion with no screw groove (flat portion) when static, while maintaining the oil pumping action (pump action) of the screw groove of the slinger.
   (3-2) By this means it is possible to ensure stable sealing properties over a prolonged period, and an improvement in the life of the seal can be achieved.

### Embodiment

An embodiment of the present invention will now be described with reference to the drawings.

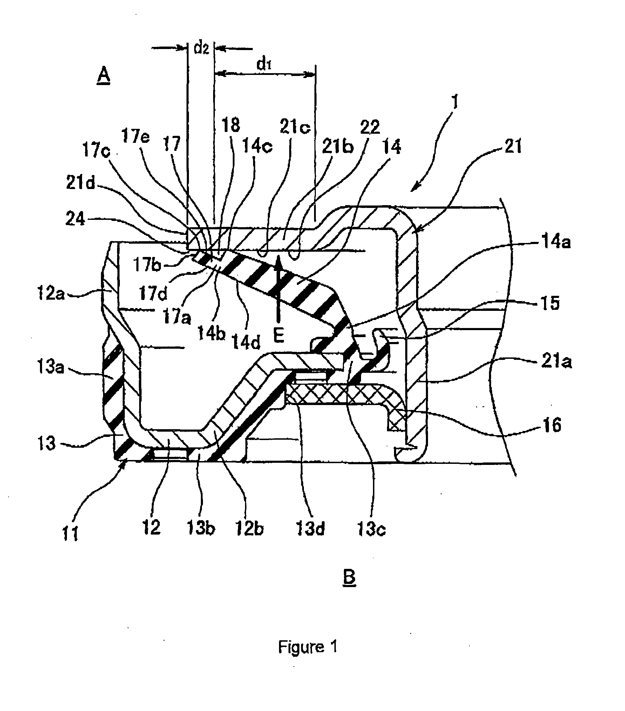

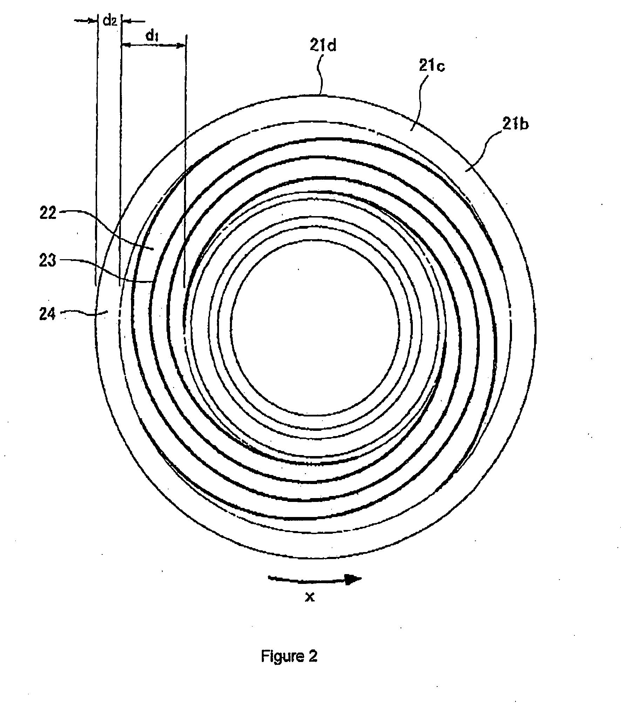

As illustrated in Figure 1, in the sealing device (end-surface lip type oil seal) 1 according to said embodiment a sealed fluid in a machine interior A is sealed by an end-surface lip 14 coming into slidable intimate contact with an axial-direction end surface 21 c of a slinger (metal ring) 21 which is secured to the outer circumference of a rotating shaft (which is not shown in the drawings) and rotates concomitantly with the rotating shaft, and the sealed fluid in the machine interior A is sealed by means of a pumping action exhibited when a screw portion 23 (Figure 2) provided on the axial-direction end surface 21c of the slinger 21 rotates. Further, the sealing device 1 according to said embodiment comprises a combination of a lip seal member 11 which is secured to the inner circumference of a shaft hole in a housing (which is not shown in the drawings), and the slinger 21 which is secured to the outer circumference of a rotating shaft which is inserted through the abovementioned shaft hole, and it exhibits a sealing function so as to suppress leakage of a sealed fluid in the machine interior A to a machine exterior B, and to suppress penetration of dust in the machine exterior B into the machine interior A.

The slinger 21 is made of a metal material and comprises a flange portion 21 b which is oriented radially outward and is integrally moulded to a machine interior-side end portion of a tubular portion 21a which mates with the outer circumferential surface of the rotating shaft, the screw portion 23 (see Figure 2), which exhibits a pumping action that is oriented radially outward, being provided in the axial-direction end surface 21c on the machine exterior side of the flange portion 21b.

As illustrated in Figure 2, the screw portion 23 comprises a spiral groove, more specifically four uniformly distributed grooves (four right-hand screws, the direction of rotation x being anticlockwise in the drawing) progressing in a clockwise manner from the inside (diametrically inner side) to the outside (diametrically outer side), and such a screw portion 23 is provided in an annular region formed with a screw portion 22 having a prescribed radial width d₁, established in a radially central portion of the axial-direction end surface 21 c of the flange portion 21 b.

Further, an annular region with no screw portion 24, in which the screw portion 23 is not provided, is established over a prescribed radial width d₂ on the outer circumferential side of the region formed with a screw portion 22, on the axial-direction end surface 21c of the flange portion 21b. Because the screw portion 23 is not provided in the region with no screw portion 24, the axial-direction end surface 21 c in this region 24 is an unmodified flat surface perpendicular to the shaft. The region with no screw portion 24 is established over an interval extending from the region formed with a screw portion 22 to an outer circumferential end portion 21d of the flange portion 21b. The region with no screw portion 24 is disposed to the outer circumferential side of the region formed with a screw portion 22, and the region formed with a screw portion 22 is disposed to the inner circumferential side of the region with no screw portion 24.

The lip seal member 11 comprises a mounting ring 12 and a rubber-like resilient body 13 deposited (vulcanization bonded) on the mounting ring 12, and further a dust lip 16 comprising a fabric is installed thereon. The mounting ring 12 is made of a metal material and comprises a flange portion 12b which is oriented radially inward and is integrally moulded to a machine exterior-side end portion of a tubular portion 12a which mates with the inner circumferential surface of the shaft hole in the housing. In the rubber-like resilient body 13, an outer circumferential rubber portion (outer circumferential seal portion) 13a deposited on the mounting ring 12, an end-surface rubber portion 13b and an inner circumferential rubber portion 13c are provided integrally, and further an end-surface lip (main lip) 14 which is supported by the inner circumferential rubber portion 13c and is in slidable intimate contact with the axial-direction end surface 21c of the flange portion 21b of the slinger 21, sealing the sealed fluid, and a grease lip 15 which is similarly supported by the inner circumferential rubber portion 13c and which retains grease are moulded integrally. Further, the dust lip (sub-lip) 16 comprising the abovementioned fabric and positioned on the machine exterior side of the grease lip 15 is installed on a stepped portion 13d, the dust lip 16 being in slidable intimate contact with the outer circumferential surface of the tubular portion 21 a of the slinger 21, thereby sealing dust.

The abovementioned end-surface lip 14 is provided oriented obliquely outward in the radial direction in such a way that its diameter gradually increases from a base end portion 14a toward a distal end portion 14b, and it has at its distal end portion 14b a lip end (sliding end) 14c, the lip end 14c being brought into slidable intimate contact with the region formed with a screw portion 22, of the region formed with a screw portion 22 and the region with no screw portion 24 established on the axial-direction end surface 21c of the abovementioned flange portion 21 b.

Further, an auxiliary lip 17 is moulded integrally at the end portion 14b of the end-surface lip 14. The auxiliary lip 17 is provided oriented obliquely outward in the radial direction in such a way that its diameter gradually increases from a base end portion 17a toward a distal end portion 17b, and it has at its distal end portion 17b a lip end (sliding end) 17c, the lip end 17c being brought into slidable intimate contact with the region with no screw portion 24, of the region formed with a screw portion 22 and the region with no screw portion 24 established on the axial-direction end surface 21 c of the abovementioned flange portion 21 b.

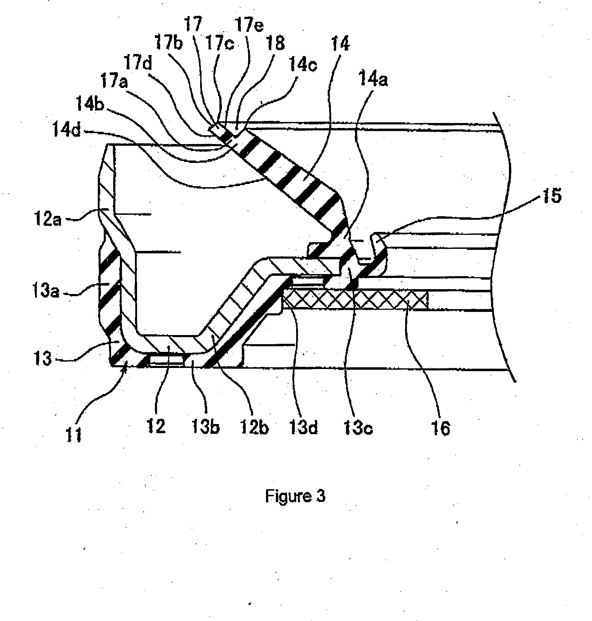

As illustrated in Figure 3, the auxiliary lip 27 is provided on a line of extension of the end-surface lip 14. An outer circumferential surface 17d of the auxiliary lip 17 is provided on a line of extension of an outer circumferential surface 14d of the end-surface lip 14. An inner circumferential surface 17e of the auxiliary lip 17 is provided parallel or substantially parallel to the outer circumferential surface 17d of the auxiliary lip 17. The lip end 17c of the auxiliary lip 17 is provided to the outer circumferential side of the lip end 14c of the end-surface lip 14. An annular indentation 18 the cross section of which exhibits a triangular or substantially triangular shape is provided between the lip end 14c of the end-surface lip 14 and the lip end 17c of the auxiliary lip 17. Therefore, by providing the indentation 18, the auxiliary lip 17 is made to be correspondingly thinner than the end-surface lip 14, and thus the auxiliary lip 17 is configured in such a way that it is more flexible than the end-surface lip 14 and readily undergoes elastic deformation.

The oil seal 1 having the abovementioned configuration is used for example for sealing around a crankshaft in an automobile engine, and as described hereinabove it exhibits a sealing function such that leakage to the machine exterior B of a sealed fluid (oil) in the machine interior A is suppressed, and penetration of dust from the machine exterior B into the machine interior A is suppressed, and its features lie in the fact that, by virtue of the abovementioned configuration, it exhibits the following operational advantages.

That is to say, in the sealing device 1 having the abovementioned configuration, the configuration is such that a region with no screw portion 24, in which no screw portion 23 is provided, is provided on an outer circumferential side of a region formed with a screw portion 22, in which a screw portion 23 is provided, on an axial-direction end surface 21 c of a flange portion 21 b of a slinger 21, an auxiliary lip 17 is moulded integrally at a distal end portion of an end-surface lip 14, and a lip end 17c of the auxiliary lip 17 is in slidable intimate contact with the region with no screw portion 24, and thus by the lip end 17c of the auxiliary lip 17 being in intimate contact with the flat region with no screw portion 24, a leakage pathway for static leakage, whereby sealed fluid on a machine interior A side leaks along the screw portion 23 when the rotating shaft has stopped, is blocked and the sealed fluid is sealed. It is therefore possible to provide a sealing device in which static leakage does not occur even if a screw portion 23 is provided in an axial-direction end surface 21c of a flange portion 21b of a slinger 21 with which an end-surface lip 14 is in slidable intimate contact, and which therefore exhibits excellent sealing performance

Further, an annular indentation 18 the cross section of which exhibits a triangular or substantially triangular shape is provided between the lip end 14c of the end-surface lip 14 and the lip end 17c of the auxiliary lip 17, and the auxiliary lip 17 is moulded in such a way that it is thinner than the end-surface lip 14, and therefore the auxiliary lip 17 is more flexible than the end-surface lip 14 and readily undergoes elastic deformation. Therefore the auxiliary lip 17 can be easily separated from the axial-direction end surface 21 c of the flange portion 21b of the slinger 21 by means of a centrifugal force acting during rotation, and/or by the pressure of a pumping action that is exhibited by the screw portion 23 and is oriented radially outward, and therefore the auxiliary lip 17 does not inhibit the pumping action (sealing action) of the screw portion 23, and the screw portion 23 can accomplish its pumping action (sealing action).

## Claims

1. Sealing device (1) in which a sealed fluid is sealed by an end-surface lip (14) coming into slidable intimate contact with an axial-direction end surface (21c) or a slinger (21) which in use, is secured to the outer circumference of a rotating shaft and rotates concomitantly with the abovementioned rotating shaft, and in which the abovementioned sealed fluid is sealed by means of a pumping action exhibited when a screw portion (23) provided on the axial-direction end surface (21c) of the abovementioned slinger (21) rotates, **characterized in that** the abovementioned slinger (21) is provided with a region with no screw portion, in which no screw portion (24) is provided, on the outer circumferential side of a region formed with a screw portion (22) in which the abovementioned screw portion (23) is provided, and **in that** a lip end (14c) of the abovementioned end-surface lip (14) is in slidable intimate contact with the abovementioned region formed with a screw portion (22), and a lip end (17c) of an auxiliary lip (17) moulded integrally at a distal end portion of said end-surface lip (14) is in slidable intimate contact with the abovementioned region with no screw portion (24).

2. Sealing device according to Claim 1, **characterized in that** the abovementioned auxiliary lip (17) is made to be thinner than the abovementioned end-surface lip (14) by providing an annular indentation (18) between the lip end (14c) of the abovementioned end-surface lip (14) and the lip end (17c) of the abovementioned auxiliary lip (17).

## Patentansprüche

1. Dichtungsvorrichtung (1), in der ein abgedichtetes Fluid durch eine Endflächenlippe (14) abgedichtet wird, die in innigen Gleitkontakt mit einer Axialrichtungsendfläche (21c) eines Ölschleuderrings (21) kommt, welcher im Gebrauch an dem Außenumfang einer Drehwelle befestigt ist und sich gleichzeitig mit der Drehwelle dreht, und in der das abgedichtete Fluid mittels einer Pumpwirkung abgedichtet wird, zu der es kommt, wenn sich ein auf der Axialrichtungsendfläche (21c) des Ölschleuderrings (21) vorgesehener Gewindeabschnitt (23) dreht, **dadurch gekennzeichnet, dass** der Ölschleuderring (21) auf der Außenumfangsseite eines mit einem Gewindeabschnitt (22) ausgebildeten Bereichs, in dem der oben genannte Gewindeabschnitt (23) vorgesehen ist, mit einem Bereich ohne Gewindeabschnitt versehen ist, in dem kein Gewindeabschnitt (24) vorgesehen ist, und dass ein Lippenende (14c) der Endflächenlippe (14) in innigem Kontakt mit dem mit einem Gewindeabschnitt (22) ausgebildeten Bereich verschiebbar ist und ein Lippenende (17c) einer Zusatzlippe (17), die integral an einem distalen Endabschnitt des Endflächenlippe (14) geformt ist, in innigem Kontakt mit dem Bereich ohne Gewindeabschnitt (24) verschiebbar ist.

2. Dichtungsvorrichtung nach Anspruch 1, **dadurch gekennzeichnet, dass** die Zusatzlippe (17) durch Vorsehen einer ringförmigen Vertiefung (18) zwischen dem Lippenende (14c) der Endflächenlippe (14) und dem Lippenende (17c) der Zusatzlippe (17) dünner ausgeführt ist als die Endflächenlippe (14).

## Revendications

1. Dispositif d'étanchéité (1) dans lequel un fluide étanchéifié est étanchéifié par une lèvre de surface d'extrémité (14) venant en contact intime coulissant avec une surface d'extrémité dans la direction axiale (21c) d'une bague de projection (21) qui, pendant l'utilisation, est fixée à la circonférence extérieure d'un arbre rotatif et tourne conjointement avec ledit arbre rotatif, et dans lequel ledit fluide étanchéifié est étanchéifié au moyen d'une action de pompage effectuée lorsqu'une portion filetée (23) prévue sur la surface d'extrémité dans la direction axiale (21c) de ladite bague de projection (21) tourne, **caractérisé en ce que** ladite bague de projection (21) est pourvue d'une région n'ayant pas de portion filetée, dans laquelle aucune portion filetée (24) n'est prévue, sur le côté circonférentiel extérieur d'une région formée avec une portion filetée (22) dans laquelle ladite portion filetée (23) est prévue, et **en ce qu'**une extrémité de lèvre (14c) de ladite lèvre de surface d'extrémité (14) est en contact intime coulissant avec ladite région formée avec une portion filetée (22), et une extrémité de lèvre (17c) d'une lèvre auxiliaire (17) moulée intégralement au niveau d'une portion d'extrémité distale de ladite lèvre de surface d'extrémité (14) est en contact intime coulissant avec ladite région n'ayant pas de portion filetée (24).

2. Dispositif d'étanchéité selon la revendication 1, **caractérisé en ce que** ladite lèvre auxiliaire (17) est fabriquée de manière à être plus mince que ladite lèvre de surface d'extrémité (14) en fournissant une indentation annulaire (18) entre l'extrémité de lèvre (14c) de ladite lèvre de surface d'extrémité (14) et l'extrémité de lèvre (17c) de ladite lèvre auxiliaire (17).
